(19) Europäisches Patentamt
European Patent Office
Office européen des brevets

(11) Veröffentlichungsnummer: **0 525 581 A2**

(12) **EUROPÄISCHE PATENTANMELDUNG**

(21) Anmeldenummer: **92112411.1**

(51) Int. Cl.5: **C09K 3/18**, H01L 23/00

(22) Anmeldetag: **21.07.92**

(30) Priorität: **31.07.91 DE 4125274**

(43) Veröffentlichungstag der Anmeldung:
**03.02.93 Patentblatt 93/05**

(84) Benannte Vertragsstaaten:
**AT BE CH DE DK ES FR GB GR IT LI NL PT SE**

(71) Anmelder: **Solvay Fluor und Derivate GmbH**
**Hans-Böckler-Allee 20**
**W-3000 Hannover 1(DE)**

(72) Erfinder: **Buchwald, Hans**
**Am Rodelberg 51A**
**W-3003 Ronnenberg(DE)**
Erfinder: **Hellmann, Joachim**
**Dohmeyers Weg 25**
**W-3000 Hannover 61(DE)**
Erfinder: **Raszkowski, Boleslaus**
**In der Hespe 246**
**W-3061 Wiedensahl(DE)**
Erfinder: **Barthélemy, Pierre**
**Chaussée de Wavre, 115/18**
**B-1370 Jodoigne(BE)**
Erfinder: **Paulus, Mireille**
**Avenue Stienon, 7/3**
**B-1020 Brüssel(BE)**

(74) Vertreter: **Lauer, Dieter, Dr.**
**c/o Solvay Deutschland GmbH, Postfach 220,**
**Hans-Böckler-Allee 20**
**W-3000 Hannover 1(DE)**

# (54) Zusammensetzungen auf Basis 1-Chlor-2,2,2,-trifluorethyl-difluormethylether zur Wasserentfernung von Oberflächen.

(57) Beschrieben werden Zusammensetzungen auf Basis von 1-Chlor-2,2,2-trifluorethyl-difluormethylether, die eine oberflächenaktive Substanz enthalten. Ferner wird die Anwendung dieser Zusammensetzungen zur Entfernung von Wasser von Oberflächen von Gegenständen unterschiedlichster Art und aus unterschiedlichsten Materialien beschrieben.

EP 0 525 581 A2

Die vorliegende Erfindung bezieht sich auf Zusammensetzungen auf Basis von 1-Chlor-2,2,2-trifluorethyl-difluormethylether und die Anwendung dieser Zusammensetzungen zur Entfernung von Wasser von Oberflächen von Gegenständen unterschiedlichster Art und aus unterschiedlichsten Materialien.

Bei vielen Bearbeitungs- und Reinigungsvorgängen, z.B. in der Elektro- oder der Elektronikindustrie, der optischen Industrie, sowie auch z.B. in der mechanischen Industrie bei der Herstellung hochwertiger Präzisionswerkstücke kommen Gegenstände mit Wasser oder Feuchtigkeit gewollt oder auch ungewollt in Berührung. Diesen Gegenständen kann daher Wasser (z.B. als Feuchtigkeitsfilm) anhaften. Die Gegenwart von anhaftendem Wasser kann sich aber im Hinblick auf weitere Bearbeitungsschritte, die Funktionstüchtigkeit und die Lebensdauer der Gegenstände nachteilig auswirken. Es ist daher notwendig, daß viele Gegenstände unmittelbar nach den Bearbeitungs- oder Reinigungsvorgängen, die die Gegenwart von Wasser beinhalten, oder auch nach bloßem Kontakt mit Luftfeuchtigkeit etc. vor der Weiterverarbeitung oder für den funktionsgerechten Einsatz vollständig von anhaftendem Wasser befreit werden.

Die Entfernung von Wasser von den Gegenständen wird nachfolgend auch als Trocknen bzw. Trocknung bezeichnet. Zur Trocknung von Gegenständen werden im Stand der Technik die Gegenstände, je nach ihrer Art, durch Erhitzen oder durch Behandlung mit Zusammensetzungen ("Trocknungszusammensetzungen") aus bestimmten Lösungsmitteln (wie z.B. Kohlenwasserstoffe, Aceton, Alkohole, oder vollhalogenierte Fluorchlorkohlenwasserstoffe) und oberflächenaktiven Substanzen getrocknet. Da die zu trocknenden Gegenstände aus unterschiedlichsten Materialien, z.B. aus Kunststoffen, Glas, Metallen oder Kombinationen derselben bestehen können, sollten die Trocknungsverfahren und die zur Trocknung verwendeten Trocknungszusammensetzungen mit einer Vielzahl von Materialien verträglich sein. Trocknung durch Erhitzen stellt im allgemeinen aber eine unerwünschte, sehr hohe thermische Belastung für die zu trocknenden Gegenstände dar oder kommt wegen der hohen anzuwendenden Temperaturen für eine Vielzahl von Materialien nicht in Frage. Auch ist in vielen Fällen auf diese Weise eine fleckenfreie Trocknung nicht möglich. Die Bestandteile in den Trocknungszusammensetzungen wiederum, insbesondere das die Hauptkomponente bildende Lösungsmittel, sollte sich gegenüber einer Vielzahl unterschiedlichster Materialien inert verhalten.

Zwar wurden bereits viele Anstrengungen unternommen, um für verschiedene Anwendungsgebiete und für verschiedene Materialien Trocknungszusammensetzungen mit den gewünschten Eigenschaften, wie z.B. hohe Trocknungswirkung, Trocknungsqualität bzw. gute Inertheit gegenüber den zu trocknenden Gegenständen, zu erzielen, doch sind die bekannten Zusammensetzungen in ihren anwendungstechnischen, toxikologischen und die Umwelt beeinflussenden Eigenschaften immer noch verbesserungsbedürftig. Die hohen Anforderungen hinsichtlich Inertheit, Trocknungswirkung und Trocknungsqualität werden durch die bekannten Zusammensetzungen des Standes der Technik nicht immer oder häufig nur unbefriedigend erfüllt. Oder andere bekannte Zusammensetzungen enthalten größere Anteile an toxikologisch und unter Sicherheitsaspekten (niedriger Flammpunkt) bedenklichen Lösungsmitteln. Andere Zusammensetzungen enthalten Lösungsmittelbestandteile, für die aufgrund ihrer die Umwelt beeinflussenden Eigenschaften ein Ersatz durch andere, für die jeweiligen Anwendungszwecke mindestens gleichermaßen gut geeignete Lösungsmittel wünschenswert ist. Es besteht somit ein Bedürfnis nach neuen Trocknungszusammensetzungen mit verbesserten Eigenschaften, die darüber hinaus auch hinsichtlich der Kriterien Toxikologie und insbesondere Umweltbeeinflussung erhöhte Unbedenklichkeit aufweisen.

Es bestand daher die Aufgabe, neue Zusammensetzungen zur Wasserentfernung (Trocknung) von Oberflächen von Gegenständen zur Verfügung zu stellen, die die Nachteile des Standes der Technik überwinden und zur Wasserentfernung besonders gut geeignet sind.

Zur Lösung der Aufgabe schlägt die Erfindung neue Zusammensetzungen vor, die sich durch einen Gehalt an 99,99 bis 90 Gew.-% 1-Chlor-2,2,2-trifluorethyl-difluormethylether und 0,01 bis 10 Gew.-% einer darin gelösten, oberflächenaktiven Substanz oder eines Gemisches dieser oberflächenaktiven Substanzen auszeichnen, wobei die Summe der Bestandteile 100 Gew.-% ist.

In einer zweckmäßigen Untervariante der Erfindung sind die Zusammensetzungen dadurch gekennzeichnet, daß sie 99,95 bis 95 Gew.-% des 1-Chlor-2,2,2-trifluorethyl-difluormethylethersund 0,05 bis 5 Gew.-% der oberflächenaktiven Substanz enthalten.

Die Trocknungszusammensetzungen der Erfindung können an sich jede oberflächenaktive Substanz enthalten, welche lösungsmittellöslich (d.h. hier löslich in 1-Chlor-2,2,2-trifluorethyl-difluormethylether) ist und welche die Verdrängung bzw. Entfernung von Wasser von den Oberflächen der zu trocknenden Gegenstände durch den 1-Chlor-2,2,2-trifluorethyl-difluormethylether erleichtert. Solche oberflächenaktiven Substanzen sind in zweckmäßigen Ausgestaltungen der erfindungsgemäßen Zusammensetzungen ausgewählt aus den Gruppen der oberflächenaktiven organischen Amin-, Ammonium- und Amidverbindungen, der oberflächenaktiven organischen Säuren, der oberflächenaktiven Phosphorsäureester, der Salze aus a) oberflächenaktiven organischen Amin-, Ammonium- oder Amidverbindungen mit b) oberflächenaktiven

organischen Säuren, Phosphorsäuremono- oder Phosphorsäurediestern, sowie Gemischen derselben.

Die oberflächenaktiven organischen Aminverbindungen im Sinne der Erfindung können von Mono- und Diaminverbindungen abgeleitet sein. In der Untergruppe der Monoaminverbindungen können diese primäre, sekundäre oder tertiäre Amine sein, beispielsweise Mono-, Di- und Trialkylamine, deren Alkylreste geradkettig oder verzweigt, gesättigt oder ungesättigt, teilweise halogeniert oder perfluoriert sein können und deren Alkylreste auch weitere funktionelle Gruppen, wie z.B. Hydroxygruppen, tragen können. Die Aminverbindungen können z.B. auch Amine sein, die außer mit Alkylresten teilweise auch mit Oxyalkylengruppen substituiert sind. Beispiele für Monoaminverbindungen sind C8- bis C12-Alkylamine, wie insbesondere Nonylamin, Octylamin oder 2-Ethylhexylamin; Fluoramine der allgemeinen Formel $R_F$-X-$NR^1R^2$, worin $R_F$ einen perfluorierten Alkylrest mit bis zu 20 C-Atomen bedeutet, X einen gesättigten oder ungesättigten, gegebenenfalls teilhalogenierten C1- bis C5-Alkylenrest bedeutet und $R^1$ und/oder $R^2$ Wasserstoff, Niedrigalkylreste (d.h. C1- bis C4-Alkylreste) oder Hydroxygruppen-substituierte Niedrigalkylreste bedeuten, wie insbesondere z.B. Fluoramine wie $R_FC_2H_4NH_2$, $R_FC_2H_4N(C_2H_5)_2$, $R_FCF=CH\text{-}CH_2N(C_2H_5)_2$, $R_FC_2H_4NHC_2H_4OH$, $R_FCF=CH\text{-}CH_2NHC_2H_4OH$, $R_FC_2H_4N(C_2H_4OH)_2$ und $R_FCF=CHCH_2N(C_2H_4OH)_2$; Oxyalkyl-substituierte Amine der allgemeinen Formel

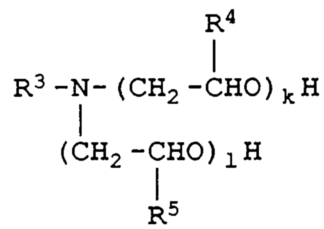

worin $R^3$ einen C6- bis C20-Alkylrest bedeutet, $R^4$ und/oder $R^5$ Wasserstoff oder Methyl bedeuten und k und/oder l für eine ganze Zahl von 1 bis 5 stehen.

Von den Monoaminverbindungen leiten sich beispielsweise auch oberflächenaktive Ammoniumverbindungen im Sinne der Erfindung ab. Diese können einerseits Salze der vorstehend beschriebenen primären, sekundären und tertiären Amine mit anorganischen Säuren sein. Andererseits können die Aminverbindungen auch quartäre Ammoniumsalze sein, deren N-Atom durch vier organische Reste substituiert ist. Solche quartären Ammoniumverbindungen genügen z.B. der allgemeinen Formel $R_2N^+R'_2$, worin R einen C6- bis C8-Alkylrest und R' einen C1- bis C2-Alkylrest bedeuten. Andere quartäre Ammoniumverbindungen sind außer mit Alkylresten auch teilweise mit Oxyalkylgruppen substituiert und genügen z.B. der allgemeinen Formel

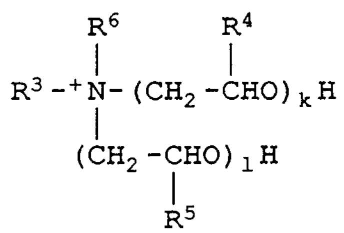

worin $R^3$ einen C6- bis C20-Alkylrest bedeutet, $R^6$ einen C1- bis C10-Alkylrest bedeutet, $R^4$ und/oder $R^5$ Wasserstoff oder Methyl bedeuten und k und/oder l für eine ganze Zahl von 1 bis 5 stehen.

In der Untergruppe der Diaminverbindungen der oberflächenaktiven organischen Aminverbindungen im Sinne der Erfindung sind die beiden, in diesen Verbindungen enthaltenen Aminogruppen durch eine Alkylenkette mit bis zu 20 C-Atomen verknüpft. Die beiden Aminogruppen der Diaminverbindung können jeweils primäre, sekundäre oder tertiäre Aminogruppen sein. Solche Diaminverbindungen genügen z.B. der allgemeinen Formel $R^7R^8N\text{-}Y\text{-}NR^9R^{10}$, worin Y eine C4- bis C20-Alkylenkette bedeutet und $R^7$, $R^8$, $R^9$ und/oder $R^{10}$ für Wasserstoff, für C1- bis C6-Alkylreste oder für Ethoxy-substituierte C1- bis C6-Alkylreste stehen; Beispiele für diese Diaminverbindungen sind insbesondere 1,4-Butandiamin, 1,6-Hexandiamin und 1,12-Dodecandiamin. Andere Diaminverbindungen genügen z.B. der allgemeinen Formel $R^{11}\text{-}NH\text{-}(CH_2)_m\text{-}NH_2$, worin m für eine ganze Zahl von 1 bis 9 steht und $R^{11}$ einen aliphatischen, gegebenenfalls ungesättigten, C1- bis C25-Alkylrest bedeutet; Beispiele für solche Diaminverbindungen sind insbesondere

Oleylamino-propylenamin, Stearylamino-propylenamin, Palmitylamino-propylenamin.

Von den Diaminverbindungen leiten sich beispielsweise auch oberflächenaktive Monoamidverbindungen im Sinne der Erfindung ab. Solche Monoamidverbindungen genügen z.B. der allgemeinen Formel $R_F(CH_2)_n$-Z-NH-$(CH_2)_o$-$NR^{12}R^{13}$, worin $R_F$ einen perfluorierten Alkylrest mit bis zu 20 C-Atomen bedeutet, Z Sulfonyl oder Carbonyl bedeutet, $R^{12}$ und/oder $R^{13}$ Niedrigalkylreste (d.h. C1- bis C4-Alkylreste) bedeuten und n und/oder o für eine ganze Zahl von 1 bis 5 stehen. Beispiele für solche oberflächenaktive Monoamidverbindungen sind insbesondere z.B. die Verbindungen $R_FC_2H_4SO_2NHCH_2CH_2CH_2N(CH_3)_2$, $R_FC_2H_4CONHCH_2CH_2CH_2N(CH_3)_2$, $R_FSO_2NHCH_2CH_2CH_2N(CH_3)_2$ und $R_FCONHCH_2CH_2CH_2N(CH_3)_2$.

Zu den oberflächenaktiven Substanzen aus der Gruppe der Amidverbindungen gehören auch Diamidverbindungen, die z.B. der allgemeinen Formel

$$R^{14}-CO-\underset{\displaystyle R^{11}}{\underset{|}{N}}-(CH_2)_p-NH-COR^{14}$$

genügen, worin $R^{11}$ einen aliphatischen, gegebenenfalls ungesättigten C1- bis C25-Alkylrest bedeutet, $R^{14}$ einen aliphatischen C10- bis C30-Alkylrest mit einer Doppelbindung bedeutet und p für eine ganze Zahl von 1 bis 9 steht. Beispiele für solche Diamidverbindungen sind Dioleyl-oleylamido-propylenamid, Diundecylenyl-oleylamido-propylenamid, Dioleyl-stearylamido-propylenamid, Dioleyl-palmitylamido-propylenamid und Dilinoleyl-oleylamido-propylenamid.

Zu den oberflächenaktiven organischen Säuren im Sinne der Erfindung gehören Dicarbonsäuren HOOC-$(CH_2)_q$-COOH mit q gleich einer ganzen Zahl von 1 bis 10; Monocarbonsäuren $R^{15}$-COOH, organische Sulfonsäuren $R^{15}$-$SO_3H$ und Monoester der Schwefelsäure $R^{15}$-$OSO_3H$; der Rest $R^{15}$ hat in den genannten organischen Säuren die Bedeutung eines gesättigter oder ungesättigten, gegebenenfalls Hydroxylgruppen-substituierten, C1- bis C20-Alkylrestes oder eines C7- bis C26-Alkylphenylrestes. Beispiele für solche oberflächenaktiven organischen Säuren sind z.B. Malonsäure, Bernsteinsäure, Succinsäure, Dodecandisäure etc.; C8- bis C12-Carbonsäuren wie insbesondere Octansäure, Nonansäure; Fettsäuren wie Oleinsäure, Stearinsäure, Palmitinsäure; Alkylsulfonsäuren wie Alkylbenzolsulfonate.

Zu den oberflächenaktiven Phosphorsäureestern im Sinne der Erfindung gehören Phosphorsäuremono-, Phosphorsäuredi- und Phosphorsäuretriester, d.h. es liegen Phosphorsäureverbindungen vor, in denen eine, zwei oder alle drei Hydroxygruppen der Phosphorsäure durch gleiche oder auch unterschiedliche, unverzweigte oder verzweigte, gesättigte oder ungesättigte Alkylgruppen, durch Arylgruppen, durch alkylsubstituierte Arylgruppen oder auch durch Oxyalkylengruppen oder gegebenenfalls durch monocyclische aromatische Gruppen modifizierte Oxyalkylengruppen verestert sind. Solche Phosphorsäureester genügen z.B. der allgemeinen Formel $(R^{16}O)(R^{17}O)(R^{18}O)P=O$. Der Rest $R^{16}$ steht hierin für einen geradkettigen oder verzweigten C1- bis C20-Alkylrest, einen C7-bis C26-Alkylphenylrest, einen Phenylrest, einen C6- bis C26-Ethoxyalkylrest, sowie für einen Oxyalkylenrest oder für einen durch eine monocyclische aromatische Gruppe modifizierten Oxyalkylenrest der Formel -T-$(OC_rH_{2r})_s$-OH; T steht hierin für einen gesättigten oder ungesättigten Alkylenrest, für einen Arylenrest oder für einen zweiwertigen aliphatisch-aromatischen Rest, wobei der Rest T bis zu 40 C-Atome besitzen kann, und s ist eine ganze Zahl zwischen 2 und 30 und r ist 2, 3 oder 4. Die Reste $R^{17}$ und $R^{18}$ bedeuten im Falle von Phosphorsäuremonoestern beide Wasserstoff und im Falle von Phosphorsäuretriestern besitzen die Reste $R^{17}$ und $R^{18}$ unabhängig voneinander die Bedeutung von $R^{16}$. Im Falle von Phosphorsäurediestern bedeutet einer der Reste $R^{17}$ und $R^{18}$ Wasserstoff und der verbleibende Rest besitzt die Bedeutung von $R^{16}$. Beispiele für oberflächenaktive Substanzen aus der Gruppe der Phosphorsäureester sind insbesondere z.B. Butylphosphat, Octylphosphat, Decylphosphat, 2-Ethylhexylphosphat, Didecylphosphat, Didodecylphosphat, Di-(3,6-dioxapentadecyl)-phosphat, Tri-(2-ethylhexyl)-phosphat, Tri-n-butylphosphat, Triphenylphosphat oder Diphenyl-(2-ethylhexyl)-phosphat.

Eine weitere Gruppe der oberflächenaktiven Substanzen im Sinne der Erfindung sind Salze aus a) oberflächenaktiven organischen Amin-, Ammonium- oder Amidverbindungen mit b) oberflächenaktiven organischen Säuren, Phosphorsäuremono- oder Phosphorsäurediestern. Diese Salze können zum Beispiel Kombinationen aus den oben beschriebenen Diaminen der Formel $R^7R^8N$-Y-$NR^9R^{10}$ und den oben beschriebenen Phosphorsäuremono- bzw. Phosphorsäurediestern der Formel $(R^{16}O)(R^{17}O)(R^{18}O)P=O$ mit $R^{17}$ gleich Wasserstoff sein. Beispiele für solche Salze sind insbesondere 1,12-Dodecandiammonium-bis-(decylphosphat), 1,12-Dodecandiammonium-bis-(didodecylphosphat), 1,6-Hexandiammonium-bis-(2-ethylhexylphosphat), 1,12-Dodecandiammonium-bis-(di-3,6-dioxapentadecyl-phosphat), 1,4-Butandiammonium-bis-(di-3,6-dioxapentadecyl-phosphat), 1-Aminododecyl-12-ammonium-didecylphosphat, 1-Aminododecyl-12-ammonium-didodecylphosphat, 1-Aminododecyl-12-ammonium-(di-3,6-dioxapentadecyl-phosphat) und 1-Aminohexyl-6-ammonium-didodecylphosphat. Weiterhin können die Salze auch Kombinationen aus aliphatischen C10-bis C20-Carbonsäuren mit einer Doppelbindung und einerseits den oben beschriebenen Diaminen der Formel $R^{11}$-NH-$(CH_2)_m$-$NH_2$ oder andererseits den oben beschriebenen Diamiden der Formel

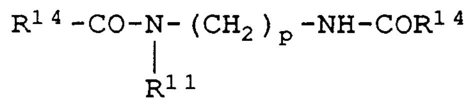

sein. Beispiele für diese Salze sind einerseits insbesondere z.B. Oleylaminopropylenamin-dioleat, Oleylaminopropylenamin-diundecylenat, Stearylaminopropylenamin-dioleat, Palmitylaminopropylenamin-dioleat und Oleylaminopropylenamin-dilinoleat bzw. andererseits insbesondere z.B. Dioleyl-oleylamidopropylenamid, Diundecylenyl-oleylamidopropylenamid, Dioleyl-stearylamidopropylenamid, Dioleyl-palmitylamidopropylenamid und Dilinoleyl-oleylamidopropylenamid. Andere Salze dieser Gruppe der oberflächenaktiven Substanzen im Sinne der Erfindung genügen z.B. der allgemeinen Formel

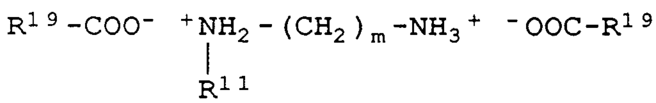

worin $R^{11}$ ein gesättigter oder ungesättigter aliphatischer C1- bis C25-Rest bedeutet, $R^{19}$ einen C10- bis C30-Alkylrest mit mindestens einer Doppelbindung und zusätzliche Substitution durch eine Hydroxylgruppe oder einen Acrylrest bedeutet und m für eine ganze Zahl von 1 bis 9 steht. Eine andere Gruppe von Salzen genügt z.B. der allgemeinen Formel

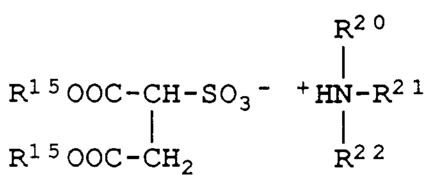 ,

worin $R^{15}$ die Bedeutung eines gesättigten oder ungesättigten, gegebenenfalls Hydroxylgruppen-substituierten, C1- bis bis C20-Alkylrestes oder eines C7- bis C26-Alkylphenylrestes besitzt und $R^{20}$, $R^{21}$ und/oder $R^{22}$ für Wasserstoff oder für einen, gegebenenfalls mit Hydroxylgruppen substituierten, C1- bis C20-Alkylrest stehen.

In einer zweckmäßigen Ausgestaltung der Erfindung liegen Zusammensetzungen vor, die als oberflächenaktive Substanzen ein Gemisch aus a) einer oberflächenaktiven organischen Aminverbindung mit b) einer oberflächenaktiven organischen Säure oder mit einem oberflächenaktiven Phosphorsäureester in einem Molverhältnis von a:b von 0,3:0,7 bis 0,55:0,45 enthalten.

In besonders vorteilhaften Ausgestaltungen der Erfindung enthalten die Zusammensetzungen als oberflächenaktive organische Aminverbindung ein geradkettiges oder verzweigtes C8- bis C12-Alkylamin. Besonders bevorzugte Amine sind Nonylamin, Octylamin oder 2-Ethylhexylamin.

In einer anderen vorteilhaften Ausgestaltung der erfindungsgemäßen Zusammensetzungen enthalten diese als oberflächenaktive Substanz eine organische Säure, die eine C8- bis C12-Carbonsäure, vorzugsweise Octansäure ist.

In einer weiteren vorteilhaften Ausgestaltung der erfindungsgemäßen Zusammensetzungen enthalten diese als oberflächenaktive Substanzen Phosphorsäureester, die Alkyl-, Aryl- oder Aryl-alkylphosphate sind. Besonders bevorzugte Phosphorsäureester sind z.B. Tri-(2-ethylhexyl)-phosphat, Tri-n-butylphosphat, Triphenylphosphat oder Diphenyl-(2-ethylhexyl)-phosphat.

Die vorstehend beschriebenen erfindungsgemäßen Zusammensetzungen sind flüssige homogene Zusammensetzungen mit einer ungewöhnlichen Wirksamkeit für die Entfernung von Wasser von Oberflächen von Gegenständen. Ein weiterer Gegenstand der Erfindung betrifft daher die Wasserentfernung von

Oberflächen von Gegenständen unter Verwendung der erfindungsgemäßen Zusammensetzungen.

Ferner betrifft die Erfindung auch ein Verfahren zur Wasserentfernung von Oberflächen von Gegenständen, welches sich dadurch auszeichnet, daß man die Oberflächen mit den weiter oben beschriebenen erfindungsgemäßen Zusammensetzungen behandelt.

Durch die Erfindung werden Zusammensetzungen zur Verfügung gestellt, die besonders gut für die Entfernung von Wasser von Oberflächen von festen Gegenständen geeignet sind. Die zu behandelnden Oberflächen, die feucht, wassernaß und/oder mit flüssigem Wasser überzogen sind, können sehr gut durch die Behandlung mit den erfindungsgemäßen Zusammensetzungen vom anhaftenden Wasser befreit, d.h. getrocknet, werden. Die Kontaktierung der Oberflächen mit den erfindungsgemäßen Zusammensetzungen kann durch Aufsprühen, Aufbürsten oder auf sonstige Art und Weise erfolgendes Aufbringen der Zusammensetzung, durch Leiten der Zusammensetzung über die Oberflächen oder durch Eintauchen der Gegenstände in die Zusammensetzung geschehen. Bei Anwendung von Eintauchungstechniken kann die Zusammensetzung in geeigneter Weise durchbewegt bzw. gerührt oder in anderer Weise in ihrer Wirkung, z.B. durch Ultraschall, unterstützt werden.

Die Entfernung des Wassers kann bei Temperaturen von oberhalb des Erstarrungspunktes von Wasser bis zum Siedepunkt der Zusammensetzung und/oder der Temperatur, bei der sich Wasser immer noch im flüssigen Zustand befindet angewendet werden. Die Zeit der Behandlung ist nicht besonders kritisch, da eine erhebliche Menge von Wasser von den Oberflächen bereits nach anfänglichem Kontakt der Oberflächen mit den erfindungsgemäßen Zusammensetzungen entfernt wird. Für praktische Zwecke empfiehlt sich gewöhnlich, daß die zu trocknenden Oberflächen mit der Zusammensetzung etwa 1 Minute lang in Kontakt sein sollten, obgleich - je nach den jeweiligen Oberflächen des Trocknungsgutes bzw. den jeweiligen Umständen des Trocknungsvorganges - auch längere oder kürzere Zeiten angewendet werden können. Üblicherweise wird der feste Gegenstand nach der Trocknung mit frischem, flüssigen und/oder dampfförmigen 1-Chlor-2,2,2-trifluorethyl-difluormethylether gespült; gewünschtenfalls kann auch mit einem wasserstoffhaltigen Fluorchlorkohlenwasserstoff (bspw. ein Dichlortrifluorethan, ein Dichlormonofluorethan oder ein Dichlorpentafluorethan etc.) und/oder ggf. einem anderen nichtwäßrigen, gegenüber den Oberflächen inerten Lösungsmittel gespült werden; vorzugsweise wird jedoch mit 1-Chlor-2,2,2-trifluorethyl-difluormethylether gespült. Hierdurch können ggf. auf den Oberflächen zurückgebliebene, ober flächenaktive Substanzen entfernt werden. Schließlich kann gewünschtenfalls den Gegenständen nach der Trocknung anhaftendes Lösungsmittel von den Oberflächen durch herkömmliche Techniken, beispielsweise durch Abdampfen, entfernt werden.

Die erfindungsgemäßen Zusammensetzungen erfüllen alle Kriterien die für eine gute Zusammensetzung für die Entfernung von Wasser von Oberflächen gelten. So ermöglichen sie eine wirksame Trocknung von Gegenständen aus unterschiedlichsten Materialien. Sie eignen sich gleichermaßen gut für Gegenstände aus Metall, aus Glas, aus feuerfesten Materialien, aus Edelsteinen oder aus üblichen Kunststoffen. Die Entfernung von Wasser geschieht so schnell und so vollständig wie möglich. Die Zusammensetzungen bilden keine Emulsionen mit Wasser und ermöglichen eine schnelle Bildung einer getrennten Wasser- und Lösungsmittelphase. Dieses Kriterium ist sehr wichtig, da im Falle einer Emulsionsbildung sich einerseits Wasser in den Zusammensetzungen anreichern und andererseits ein Teil der Zusammensetzung mit dem abzuführenden Wasser aus der Trocknungsstufe ausgeschleust werden könnte und dadurch die Phasentrennung von Wasser und Lösungsmittel erschwert würde. Schließlich sind die erfindungsgemäßen Zusammensetzungen über einen langen Anwendungszeitraum stabil, d.h. sie verarmen nicht bzw. nur in untergeordnetem Maße an den im 1-Chlor-2,2,2-trifluorethyl-difluormethylether enthaltenen oberflächenaktiven Substanzen. Die oberflächenaktiven Substanzen werden durch das abzuführende Wasser nicht oder nur kaum aus dem 1-Chlor-2,2,2-trifluorethyl-difluormethylether extrahiert, da die Affinität von 1-Chlor-2,2,2-trifluorethyl-difluormethylether insbesondere zu den bevorzugt verwendeten oberflächenaktiven Substanzen größer ist als die Affinität des Wassers zu diesen oberflächenaktiven Substanzen. Ferner besitzen die erfindungsgemäßen Zusammensetzungen keine Flammpunkte.

Nachfolgend soll die Erfindung anhand von Beispielen weiter erläutert werden, ohne sie jedoch in ihrem Umfange zu beschränken.

## Beispiele

In einer handelsüblichen 3-Kammer-Trocknungsanlage wurden Trocknungsversuche mit Gegenständen aus unterschiedlichsten Materialien vorgenommen. Die 3-Kammer-Trocknungsanlage bestand aus einem Trocknungsbad und zwei hintereinander zum Trocknungsbad kaskadenartig angeordneten Spülbädern, wobei das zweite Spülbad mit einem Überlauf zum ersten Spülbad und das erste Spülbad mit einem Überlauf zum Trocknungsbad versehen war. Über den drei Bädern erstreckte sich ein gemeinsamer

Dampfraum, der nach oben zum Zwecke der Lösungsmittelkondensation mit einer Kühlzone versehen war. Das in der Kühlzone abgeschiedene und gesammelte Kondensat wurde über eine Rückführungsleitung in das zweite Spülbad rezirkuliert. Alle drei Kammern der Trocknungsanlage waren zusätzlich mit separaten Heizvorrichtungen ausgestattet. Das Trocknungsbad war durch einen Überlauf mit einer Wasserabscheideeinrichtung verbunden, in der die Trocknungszusammensetzung vom Wasser durch Separation getrennt wurde. Von der Wasserabscheideeinrichtung wurde die Trocknungszusammensetzung nach der Wasserabtrennung mittels einer Pumpe über eine Rückführungsleitung in das Trocknungsbad rezirkuliert.

Zur Trocknung wurden die Gegenstände zunächst 1 Minute in das Trocknungsbad mit siedender Trocknungszusammensetzung getaucht. Nach der Trocknung im Trocknungsbad wurde der zu trocknende Gegenstand in den zwei Spülbädern mit jeweils siedendem 1-Chlor-2,2,2-trifluorethyl-difluormethylether für jeweils 1 Minute unter Eintauchen gespült. Nach 1-minütigem Verweilen in der Dampfphase verließ der zu trocknende Gegenstand die Anlage absolut trocken und kühl genug, daß man ihn anfassen konnte.

Die Trocknungsbad- und Spülbadzusammensetzungen, die Trocknungsbedingungen, die Art der zu trocknenden Gegenstände und die Trocknungsergebnisse sind in der Tabelle 1 wiedergegeben. Hierin steht die Bezeichnung "Isoflurane" für 1-Chlor-2,2,2-trifluorethyl-difluormethylether.

Tabelle 1

| Nr. | Zusammensetzungen | Trocknungsbedingungen | Material | Ergebnis |
|---|---|---|---|---|
| 1 | Trocknungsbad 1<br>99,5 Gew.-% Isoflurane; 0,5 Gew.-% oberflächenaktive Substanz aus Octansäure (0,6 mol) und Octylamin (0,4 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |
| 2 | Trocknungsbad 1<br>99,5 Gew.-% Isoflurane; 0,5 Gew.-% oberflächenaktive Substanz aus Tri-n-butylphosphat (0,6 mol) und Octylamin (0,4 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |

| Nr. | Zusammensetzungen | Trocknungsbedingungen | Material | Ergebnis |
| --- | --- | --- | --- | --- |
| 3 | Trocknungsbad 1<br>99,5 Gew.-%<br>Isoflurane<br>0,5 Gew.-%<br>oberflächenaktive Substanz aus Triphenylphosphat (0,6 mol) und 2-Ethylhexylamin (0,4 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |
| 4 | Trocknungsbad 1<br>95 Gew.-%<br>Isoflurane<br>5 Gew.-% oberflächenaktive Substanz aus Octansäure (0,45 mol) und Octylamin (0,55 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |

| Nr. | Zusammen-setzungen | Trocknungs-bedingungen | Material | Ergebnis |
|---|---|---|---|---|
| 5 | <u>Trocknungsbad 1</u><br>99,5 Gew.-% Isoflurane; 0,5 Gew.-% oberflächenaktive Substanz aus iso-Octansäure (0,6 mol) und tert.-Octylamin (0,4 mol)<br><br><u>Spülbad 2 und 3</u><br>Isoflurane<br><br><u>Dampfraum 4</u><br>Isoflurane | 1) 1 Min. siedend getaucht<br>2) 1 Min. siedend getaucht<br>3) 1 Min. siedend getaucht<br>4) 1 Min. Verweilzeit im Dampfraum | a) Glaslinsen<br>b) Siliciumscheiben<br>c) Aluminiumplatten<br>d) Kunststoffteile (Polyethylen) | absolut trocken<br>absolut trocken<br>absolut trocken<br>absolut trocken |
| 6 | <u>Trocknungsbad 1</u><br>99,5 Gew.-% Isoflurane; 0,5 Gew.-% oberflächenaktive Substanz aus iso-Octansäure (0,6 mol) und Nonylamin (0,4 mol)<br><br><u>Spülbad 2 und 3</u><br>Isoflurane<br><br><u>Dampfraum 4</u><br>Isoflurane | 1) 1. Min. siedend getaucht<br>2) 1 Min. siedend getaucht<br>3) 1 Min. siedend getaucht<br>4) 1 Min. Verweilzeit im Dampfraum | a) Glaslinsen<br>b) Siliciumscheiben<br>c) Aluminiumplatten<br>d) Kunststoffteile (Polyethylen) | absolut trocken<br>absolut trocken<br>absolut trocken<br>absolut trocken |

| Nr. | Zusammensetzungen | Trocknungsbedingungen | Material | Ergebnis |
|---|---|---|---|---|
| 7 | Trocknungsbad 1<br>99,5 Gew.-% Isoflurane;<br>0,5 Gew.-% oberflächenaktive Substanz aus 2-Ethylhexansäure (0,6 mol) und tert.-Octylamin (0,4 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |
| 8 | Trocknungsbad 1<br>99,5 Gew.-% Isoflurane;<br>0,5 Gew.-% oberflächenaktive Substanz aus 2-Ethylhexansäure (0,6 mol) und Nonylamin (0,4 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |

| Nr. | Zusammensetzungen | Trocknungsbedingungen | Material | Ergebnis |
|---|---|---|---|---|
| 9 | Trocknungsbad 1<br>99,5 Gew.-% Isoflurane;<br>0,5 Gew.-% oberflächenaktive Substanz aus Nonansäure (0,6 mol) und tert.-Octylamin (0,4 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |
| 10 | Trocknungsbad 1<br>99,5 Gew.-% Isoflurane;<br>0,5 Gew.-% oberflächenaktive Substanz aus Nonansäure (0,6 mol) und Nonylamin (0,4 mol)<br><br>Spülbad 2 und 3<br>Isoflurane<br><br>Dampfraum 4<br>Isoflurane | 1) 1 Min. siedend getaucht<br><br>2) 1 Min. siedend getaucht<br><br>3) 1 Min. siedend getaucht<br><br>4) 1 Min. Verweilzeit im Dampfraum | a) Glaslinsen<br><br>b) Siliciumscheiben<br><br>c) Aluminiumplatten<br><br>d) Kunststoffteile (Polyethylen) | absolut trocken<br><br>absolut trocken<br><br>absolut trocken<br><br>absolut trocken |

## Patentansprüche

1. Zusammensetzungen, gekennzeichnet durch einen Gehalt an 99,99 bis 90 Gew.-% 1-Chlor-2,2,2-trifluorethyl-difluormethylether und 0,01 bis 10 Gew.-% einer darin gelösten, oberflächenaktiven Substanz oder eines Gemisches dieser oberflächenaktiven Substanzen, wobei die Summe der Bestandteile 100 Gew.-% ist.

2. Zusammensetzungen nach Anspruch 1, gekennzeichnet durch einen Gehalt an 99,95 bis 95 Gew.-% 1-Chlor-2,2,2-trifluorethyl-difluormethylether und 0,05 bis 5 Gew.-% der oberflächenaktiven Substanz.

3. Zusammensetzungen nach einem der vorhergehenden Ansprüche, dadurch gekennzeichnet, daß die oberflächenaktive Substanz ausgewählt ist aus den Gruppen der oberflächenaktiven organischen Amin-, Ammonium- und Amidverbindungen, der oberflächenaktiven organischen Säuren, der oberflächenaktiven Phosphorsäureester, der Salze aus a) oberflächenaktiven organischen Amin-, Ammonium- oder Amidverbindungen mit b) oberflächenaktiven organischen Säuren, Phosphorsäuremono- oder Phosphorsäurediestern, sowie Gemischen derselben.

**4.** Zusammensetzungen nach einem der vorhergehenden Ansprüche, dadurch gekennzeichnet, daß sie als oberflächenaktive Substanzen ein Gemisch aus a) einer organischen Aminverbindung mit b) einer organischen Säure oder mit einem Phosphorsäureester in einem Molverhältnis von a:b von 0,3:0,7 bis 0,55:0,45 enthalten.

**5.** Zusammensetzungen nach einem der Ansprüche 3 und 4, dadurch gekennzeichnet, daß die organische Aminverbindung ein geradkettiges oder verzweigtes C8- bis C12-Alkylamin, vorzugsweise Nonylamin, Octylamin oder 2-Ethylhexylamin, ist.

**6.** Zusammensetzungen nach einem der Ansprüche 3 und 4, dadurch gekennzeichnet, daß die organische Säure eine C8- bis C12-Carbonsäure, vorzugsweise Octansäure, ist.

**7.** Zusammensetzungen nach einem der Ansprüche 3 und 4, dadurch gekennzeichnet, daß die Phosphorsäureester Alkyl-, Aryl- oder Aryl-alkylphosphate, vorzugsweise Tri-(2-ethylhexyl)-phosphat, Tri-n-butylphosphat, Tri-phenylphosphat oder Diphenyl-(2-ethylhexyl)-phosphat, sind.

**8.** Verwendung der Zusammensetzungen gemäß einem der Ansprüche 1 bis 7 zur Wasserentfernung von Oberflächen von Gegenständen.

**9.** Verfahren zur Wasserentfernung von Oberflächen von Gegenständen, dadurch gekennzeichnet, daß man die Oberflächen mit Zusammensetzungen nach einem der Ansprüche 1 bis 7 behandelt.